# EUROPEAN PATENT SPECIFICATION

(11) **EP 4 156 056 B1**
(45) Date of publication and mention of the grant of the patent: **24.12.2025**
(21) Application number: 21198924.9
(22) Date of filing: 24.09.2021
(51) Int. Cl.: G06Q 10/10

(54) **AUTOMATED INTERVIEW APPARATUS AND METHOD USING TELECOMMUNICATION NETWORKS**
VORRICHTUNG UND VERFAHREN FÜR AUTOMATISIERTE INTERVIEWS UNTER VERWENDUNG VON TELEKOMMUNIKATIONSNETZWERKEN
APPAREIL AUTOMATISÉ D'ENTRETIEN ET PROCÉDÉ UTILISANT DES RÉSEAUX DE TÉLÉCOMMUNICATION

(43) Date of publication of application: 29.03.2023
(73) Proprietor: Bull SAS, 78340 Les Clayes-sous-Bois (FR)
(72) Inventor: SAHA, Amit, Pune, Maharashtra 411057 (IN)
(74) Representative: IPAZ

(56) References cited:
- US-A1- 2018 150 739
- US-A1- 2018 189 691
- US-A1- 2019 163 807

## Description

### Technical Field

The invention relates to the automatic conduct of an interview over a telecommunication network with candidates to an open job position.

### Background

Recruiting a candidate for an open job position may be a time-consuming burden for a company. It may monopolize important human resources of the company or of an executive search agent.

Recruitment workflow comprises, in general, a deep analysis of resumes and other documents provided by candidates and face-to-face interviews with a selected part of them.

Then, a trade-off may be decided between a time and cost to devote to this recruitment process and a number of candidates to consider. However, from a statistical point of view, the more candidates are considered, the higher the probability to recruit a candidate fully matching the job description and other requirements of the company.

On the other side, since the start of the Covid-19 epidemic period, face-to-face meetings are much more difficult to organize and may even be impossible during certain time windows (like confinements).

Also, in recent years, homeworking is dramatically developing, allowing employees to work from a distant location, even from another region or country. Such a trend is even increasing since the start of the Covid-19 pandemic.

In such situations, organizing face-to-face meeting may be non-desirable, as involving costly travels for the candidates.

Document US 2019/163807 A1 discloses generating a feature vector profile of an interviewer in an interview. Document US 2018/150739 A1 relates to performing automated interviews. Document US 2018/189691 A1 refers to an analytical system for assessing certain characteristics of organisations.

### Summary

One aim of the embodiments of the invention is to provide an automation of the main steps of the recruitment workflow, making use of available telecommunication networks, so as to avoid needs for traveling and organizing face-to-face meetings and to decrease the human implication of the recruiting company in the workflow.

In a first example embodiment, an apparatus is provided for automatically conducting an interview over a telecommunication network, with at least one candidate party to an open job position; comprising means for:
- selecting a candidate party among said at least one candidate party
- initiating a communication session between said candidate party and an automated interviewing party;
- monitoring said communication session by continuously receiving an audio stream associated with said communication sessions;
- Converting language of said audio stream into text data
- determining, from said text data, at least first understandability quality features and an information quality feature, said first understandability quality feature being representative of at least word articulation and grammar correctness within said language, and said information quality feature being representative of a comparison of the semantic content of said audio stream with an expected content;
- assessing a matching value of said candidate party for said open job position.

This embodiment may comprise other features, alone or in combination, such as:
- said means are configured for selecting (S0) a candidate party by matching respective textual documents associated with said at least one candidate party with a job description document associated with said open job position;
- said means are configured for initiating said communication session by sequencing a succession of questions; and vocalizing said questions for transmission over said communication session;
- said means are configured for initiating said communication session by providing a virtual avatar and transmitting a video stream of said virtual avatar to said candidate party; and synchronizing at least one graphical feature of said virtual avatar with said questions;
- the means are further configured for determining at least a second understandability quality feature from said audio stream representative of a fluency of said language;
- said means are configured to determine said second understandability quality feature by
   ▪ providing said audio stream to an audio processing module, for transforming it into a frequency domain signal;
   ▪ extracting spectral features from said frequency domain signal, and
   ▪ using a classifier to provide a predicted class from said spectral features, said predicted class being representative of said second understandability quality feature;
- said means are further configured to determine an articulation quality feature by comparing said text data with a lexicon;
- said means are further configured to determine a grammar quality feature by producing sentences from said text data and applying at least one machine-learning model for checking linguistic acceptability of said sentences;
- said means are further configured to determine said information quality feature by determining keywords from said text data, and comparing the occurrences of said keywords with occurrences of same keywords within said expected content.
- said means are configured for detecting frauds of said candidate party;
- said means are configured for detecting frauds by verifying a face associated to said candidate party from a video stream associated with said communication session;
- said means are configured for detecting frauds by verifying a voice associated to said candidate party from said audio stream;
- said means comprises
   ▪ at least one processor; and
   ▪ at least one memory including computer program code, the at least one memory and computer program code configured to, with the at least one processor, cause the performance of the apparatus.

In another example embodiment, a method is provided for automatically conducting an interview over a telecommunication network, with at least one candidate party to an open job position; comprising steps for:
- selecting a candidate party among said at least one candidate party
- initiating a communication session between said candidate party and an automated interviewing party;
- monitoring said communication session by continuously receiving an audio stream associated with said communication sessions;
- Converting language of said audio stream into text data
- determining, from said text data, at least first understandability quality features and an information quality feature, said first understandability quality feature being representative of at least word articulation and grammar correctness within said language, and said information quality feature being representative of a comparison of the semantic content of said audio stream with an expected content;
- assessing a matching value of said candidate party for said open job position.

In another example embodiment, a computer readable medium is provided, encoding a machine-executable program of instructions to perform a method as describe here above.

### Brief Description of the Figures

Some embodiments are now described, by way of example only, and with reference to the accompanying drawings, in which :
- The Figure 1 schematically illustrates a communication network enabling embodiments of the invention.
- The Figure 2 schematically illustrates an example of functional architecture of an automated interview apparatus according to embodiments of the invention.

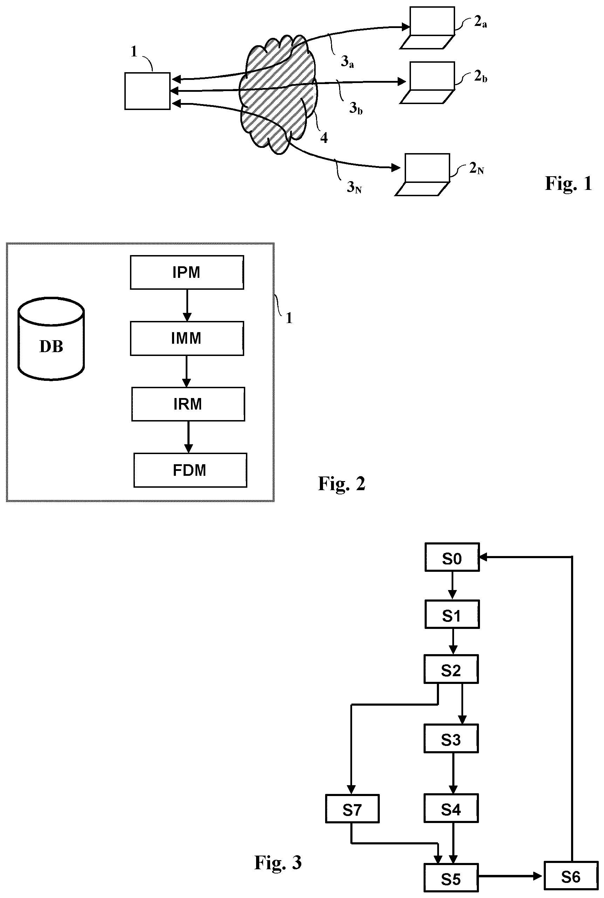

- The Figure 2 illustrates an example of functional architecture of embodiments of the invention.
- The Figure 3 schematically illustrates an example flow chart according to embodiments of the invention.

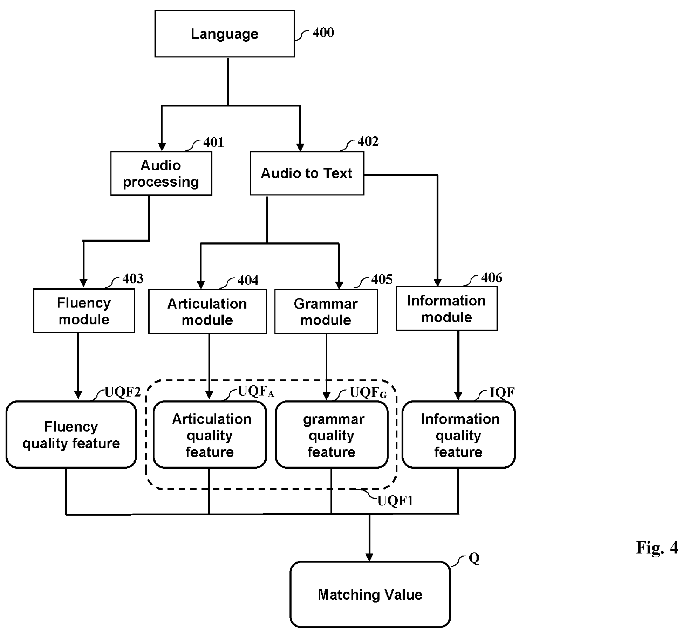

- The Figure 4 illustrates an example of functional architecture of a interview review module according to embodiments of the invention

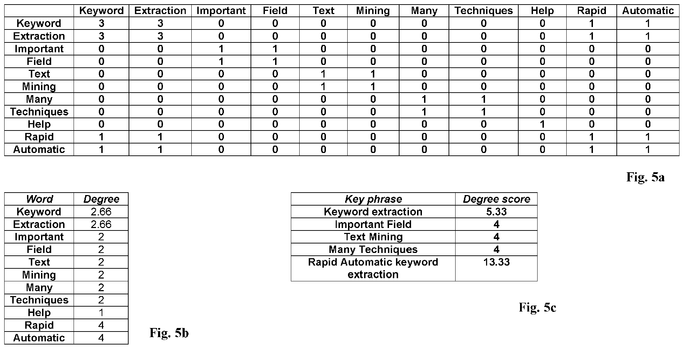

- The Figures 5a, 5b, 5c illustrate an example of processing for determining information quality feature, according to embodiments of the invention.

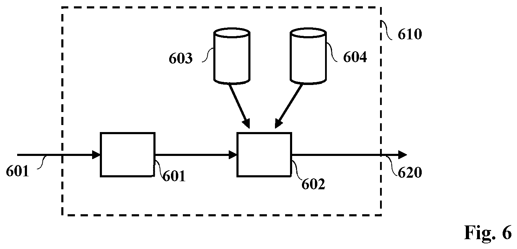

- The Figure 6 depicts an example of a functional architecture for automatic speech processing.

### Description of Embodiments

A recruitment workflow typically comprises a succession of steps including drafting a job description document, publishing this job description document, gathering of documents provided by candidates, selecting some of these candidates based on the respective documents, organizing interviews with the selected candidates, and then determining a "best" candidate to whom an offer for the job position can be proposed.

A job position may relate to an employee position within the recruiting company, but other relationships may also be considered., These other relationships comprise those where an individual proposes work resources to a company (as a freelance worker, for instance), those where a company proposes work resources or services to another company (as outsourcing company, service-providing company, etc. for instance).

More generally, a job position may encompass any assignment of a person or a group of people that requires considering many candidates in a selection process.

A job position is described in a job description document. This document (in general a textual document) comprises specifications about the job content, and, in some cases, requirements on the candidates. Such documents have typically no formal format and differ widely from one company to another.

In a recruitment workflow, candidates usually submit some documents, e.g. textual documents, to the recruiting company. These documents may comprise resumes, or curriculum vitae, describing the educational and professional careers of the candidates. They may also comprise accompanying letters explaining the views of the candidates as to why they consider themselves matching with the job description.

According to the invention, the relationships between the candidates and the recruiting company are vastly automatized and performed over a telecommunication network, avoiding (until a potential last step) face-to-face meetings and travels.

In reference to FIG. 1, an automated interview apparatus 1 can be in communication with a set of N candidate parties 2ₐ, 2_{b}..., 2_{N} through a telecommunication network 4. The candidate parties can connect to the apparatus 1 at different point of time, during a preset time window that is fixed by the recruiting company and beyond which candidate cannot be considered anymore.

We call "candidate party", a telecommunication party associated with a candidate person (or group of people) to a job position. This candidate party can be embodied by various types of telecommunication-enabled devices providing interface for a user to establish an online communication session.

These devices may thus comprise audio-producing means (audio speakers), audio-capturing means (microphone), and telecommunication means allowing the device to connect to telecommunication networks. In particular, the telecommunication means may be compliant with telecommunication standards like Wi-Fi, 3GPP, Bluetooth and the like, enabling to connect directly to an access network or indirectly through a home network. The devices may also comprise video-producing means (screen), video-capturing means (camera), keyboards, touching screens, etc. Possible devices comprise mobile phones, smartphones, tablets, laptop computers, etc.

The automated interview apparatus 1 may be also a telecommunication-enabled device, or "party". Depending on embodiments, it may or may not comprise user-facing interface (like speakers, microphones, keyboards...), but only computing means and telecommunication means allowing establishing communication sessions with the candidate parties. In particular, the telecommunication means may be compliant with telecommunication standards like Wi-Fi, 3GPP, Bluetooth and the like, enabling to connect directly to an access network or indirectly through a home network.

This apparatus may be a computer, a physical server, a logical server deployed over a farm of servers, or an application deployed over a cloud platform, etc. In particular, according to embodiments, the automated interview apparatus 1 may be considered as a "service" for both candidates and recruiting companies, from a computing point of view.

The telecommunication network 4 may be a collection of various networks including access networks, backbone networks etc. This telecommunication network may correspond to the Internet. In general, each candidate party is located at respective premises.

It enables to initiate and maintain communication sessions 3ₐ, 3_{b}, ... 3_{N} with, respectively, candidate parties 2ₐ, 2_{b}... 2_{N} over the telecommunication networks 4.

Looking deeper at the apparatus 1, the latter may be embodied as several separated modules. These modules are functional entities, and according to embodiment choices, they may be deployed over a set of physical and/or logical resources, or embedded in a single standalone physical or logical device.

In particular, as exemplified in FIGURE 2, the apparatus may comprise a database DB, an interview preparation module IPM, an interview management module, IMM, an interview review module IRM and a fraud detection module FDM.

According to embodiments, these modules may map with one or more steps of the flowchart exemplified in FIGURE 3.

In an example, the interview preparation module IPM is in charge of step S0 in FIG. 3, consisting in selecting a candidate party among one or several candidate parties.

This step may comprise gathering one or several candidates, selecting a subgroup of them, and then selecting a single one to pursue with the following steps S1-S5. The latter sub-step of selecting a single one may be iterated so as to perform subsequent steps S1-S5 on several or all of the candidates in the subgroup.

The selection of a subgroup may consist in determining a reduced number of candidates that can be handled by the subsequent steps. Despite the automation of the workflow, still preparing, managing and post-treating the interview involves resources for the recruiting company. It shall be noticed that in certain cases, hundreds of candidates may send resumes and other textual documents to open job positions.

Plus, it would not be efficient to invite candidates to join this workflow when they are prima facie not eligible or not relevant for the job position.

In consequence, a problem should be addressed consisting in shortlisting the most eligible candidates from the gathered pool of profiles.

According to embodiments, then, this selection comprises selecting a candidate party by matching textual documents associated with the received candidate parties with a job description document associated with the open job position.

This matching process may be considered as similar to a recommender system, wherein profiles of candidates are recommended for a particular open job position. So, according to embodiments, selecting a candidate party comprises using a recommendation system.

Recommendation systems have been introduced by Resnick and Varian, "Recommender systems" in Communications of the ACM 40, 56-59.

Recommendation systems can be classified in 4 different approaches: collaborative filtering, content-based filtering, knowledge-based filtering and hybrid approaches. Wei, Fu, "A survey of e-commerce recommender systems" in 2007 International Conference on service systems and service management, IEEE, pp. 1-5 discusses all these different types of recommendation techniques with their working principle in details. Al Otaibi et al. "A survey of job recommender systems" in International Journal of Physical Sciences 7, 5127-5142 provides also a detailed survey of state-of-the-art job recommendation services.

The literature is rich on this topic as many recommendation systems have been proposed, in particular using machine-learning techniques. According to the invention, various techniques may be used. The invention is considered independent on any of these techniques that may embody the step S0.

Once a group of candidates are selected or "recommended" by the automated recommendation system, a particular candidate can be selected among this group.

According to embodiments, all candidates of the group can be considered, and selected one by one (in parallel or in sequence). The order may be irrelevant, but according to embodiments, the order may depend on a matching score provided by the recommendation system.

Once a particular candidate is selected, an interview management module IMM may initiate, in a step S1 in Figure 3, a communication session between this candidate party and an automated interview party.

This automated interview party may be handled by communication means embedded in the apparatus 1.

In particular, according to embodiments, the automated interview party is configured for sequencing a succession of questions and vocalizing these questions for transmission over the communication session with the selected candidate party.

The succession of questions may be previously stored in the database DB. The questions may be stored in an audio format and then simply recovered and inserted into the communication session. Alternatively, the questions may be stored in a text format and vocalized by using text-to-voice techniques known in the art.

According to embodiments, the communication session is an audio-video communication session. The interview management module IMM can then provide a virtual avatar and transmit a video stream of this avatar to the candidate party. This virtual avatar can represent a face or larger part of a human being (face + torso for instance). It can be a video of a real person or a virtual human being, for instance automatically generated by a generative adversarial network (GAN).

Visualizing a video of a human being helps increasing the quality of the experience of the candidates, and, thus, getting valuable feedback for the post-processing steps.

According to embodiments, at least one feature is synchronized with the questions.

As an example, features like lips (or mouth) can be synchronized with the vocalization of the questions. According to such embodiments of the invention, an automatic lip sync algorithm is used to alter the video stream of the virtual avatar accord to the succession of questions.

Lip sync or lip synch (short for lip synchronization) is a technical term for matching a speaking or singing person's lip movements with sung or spoken vocals.

Automation of lip sync for a given audio track is a fairly long-standing problem, first introduced in the seminal work of Bregler et al. "Video Rewrite: driving visual speech with audio" in Siggraph, vol 97, 353-360.

However, realistic lip sync synthesis in unconstrained real-life environments was only made possible by a few recent works, like Kumar, Sotelo, Kumar, de Brébisson, Bengio, "Obamanet: Photo-realistic lip-sync from text", arXiv preprint, arXiv:1801.01442 (2017) or Supasorn Suwajanakorn, Steven M Seitz, and Ira Kemelmacher-Shlizerman. 2017. Synthesizing obama: learning lip sync from audio. ACM Transactions on Graphics (TOG) 36, 4 (2017), 95

Typically, these networks predicted the lip landmarks conditioned on the audio spectrogram in a time window. However, it is important to highlight that these networks fail to generalize to unseen target speakers and unseen audio.

A recent work by Joon Son Chung, Amir Jamaludin, and Andrew Zisserman, « You said that? » arXiv preprint arXiv:1705.02966 (2017) treated this problem as learning a phoneme-to-viseme mapping and achieved generic lip synthesis. This leads them to use a simple fully convolutional encoder-decoder model.

Even more recently, a different solution to the problem was proposed by Hang Zhou, Yu Liu, Ziwei Liu, Ping Luo, and Xiaogang Wang, « Talking Face Generation by Adversarially Disentangled Audio-Visual Representation »,arXiv preprint arXiv:1807.07860 (2018), in which the authors use audio-visual speech recognition as a probe task for associating audio-visual representations, and then employ adversarial learning to disentangle the subject-related and speech-related information inside them.

However, the inventors observe two major limitations in their work.

Firstly, to train using audio-visual speech recognition, they use 500 English word-level labels for the corresponding spoken audio. PrajwalK, R., Mukhopadhyay, R., Philip, J., Jha, A., Namboodiri, V., & Jawahar, C.V., "Towards Automatic Face-to-Face Translation" in Proceedings of the 27th ACM International Conference on Multimedia, 2019 observed that this makes their approach language dependent. It also becomes hard to reproduce this model for other languages as collecting large video datasets with careful word-level annotated transcripts in various languages is infeasible. The state-of-the-art approach which is proposed by K. R. Prajwal et al. is a fully self-supervised approach that learns a phoneme-viseme mapping, making it language independent.

Secondly, the inventors observe that their adversarial networks are not conditioned on the corresponding input audio. As a result, their adversarial training setup does not directly optimize for improved lip-sync conditioned on audio.

In contrast, K. R. Prajwal et al.'s LipGAN directly optimizes for improved lip-sync by employing an adversarial network that measures the extent of lip-sync between the frames generated by the generator and the corresponding audio sample. LipGAN tackles this problem by providing additional information about the pose of the target face as an input to the model thus making the final blending of the generated face in the target video straightforward.

According to embodiments of the invention, Interviewer Lip sync can be addressed by the state-of-the-art approach of LipGAN

The automation of the interview with the candidate party allows recruiting companies to avoid tedious and repetitive task, since questions are always the same or at least vastly similar in content and form. The amount of resources that is saved this way can be devoted in other tasks.

The interview management module IMM (or any other module) may be configured further to monitor, in a step S2, the communication session by continuously receiving an audio stream associated with the communication session.

For instance, if the communication session conveys a multi-modal stream, e.g. audio-video with or without an associated text stream, the audio stream can be extracted for monitoring. Monitoring comprises surveying the start of an audio stream so as to trigger its capturing, and surveying its end so as to stop the capturing process. It comprises also sampling and other low-level data processing mechanisms.

Typically, the semantic content of this audio stream comprises the expected answers to the succession of question.

The communication streams (audio and potentially video) can be captured and stored in the database for further reference and/or for fraud detection, as it will be explained later.

The captured audio stream can then be post-processed by an interview review module IRM.

FIGURE 4 further illustrate the post-treatment that can be undertaken by the IRM.

In a step S3, the audio stream is provided to an audio-to-text module 402. In particular, the language of the audio stream is converted into text data.

The language 400 of the audio stream may be extracted from the audio stream emitted by the candidate parties 2ₐ, 2_{b}... 2_{N}. The extraction process may comprise filtering out other audio signals, like background noise.

An Audio-to-text module 402 is configured to convert the language 400 of the audio stream into text data. The text data is a transcription of this language.

Several technical implementations are possible for the audio-to-text module to perform such a transcription.

Speech recognition is an interdisciplinary subfield of computer science and computational linguistics that develops methodologies and technologies that enable the recognition and translation of spoken language into text by computers. It is also known as automatic speech recognition (ASR), computer speech recognition or speech to text (STT). It incorporates knowledge and research in the computer science, linguistics and computer engineering fields.

Figure 6 depicts an example of a recent functional architecture for automatic speech processing.

The audio (speech) signal 600 is inputted to the audio-to-text module 610, which outputs, as a result, a text signal 620. The text signal can be a sequence of words.

The speech signal 600 is analysed by a feature extraction submodule 601, resulting in a sequence of feature vectors grouped in speech units (phonemes or triphones) patterns. Each obtained pattern is compared, by a decoding submodule 602, with reference patterns, pretrained and stored with class identities. These pretrained patterns, obtained in a learning process, may comprise phonetic dictionary 603 and acoustic models 604.

Both acoustic modelling and language modelling are important parts of modern statistically based speech recognition algorithms.

Hidden Markov models (HMMs) are widely used in many systems. Language modelling is also used in many other natural language processing applications such as document classification or statistical machine translation.

Other implementations of the decoding submodule may be based on multi-layer neural networks (MLNN), support vector machines (SVM), Kohonen neural networks, etc.

Further explanations of various embodiments of the audio-to-text module, 402, 610, can be found in several references, like the Wikipedia related page, https://en.wikipedia.org/wiki/Speech recognition, or the paper « A historically perspective of speaker-independent speech recognition in Romanian language », Diana Militaru and Inge Gavat, in Sisom & Acoustics 2014, Bucharest, 22-23 May 2014.

In a step S4, the apparatus, for instance its interview review module IRM, determines from the converted text data
- at least first understandability quality features, UQF1, and
- an information quality feature, IQF

The first understandability quality feature, UQF1, is representative of at least word articulation and grammar correctness within the language of the captured audio stream.

More generally, it captures the ability of the speaker (i.e. the candidate, party to the interview session) to be understood by listeners in general, per measuring his/her language in terms of vocal quality. As both articulation of the words, and grammar correctness may affect this ability to be understood, a respective quality feature, UQF1, is determined.

The first understandability quality feature, UQF1, may then be considered as comprising two sub-features: an articulation quality feature, UQF_{A} and a grammar quality feature UQF_{G}.

The articulation quality feature UQF_{A} may measure the quality of the voice-to-text translation. Indeed, the articulation directly affects the probability of a vocalized word to be recognized by the audio-to-text module, 402, 610.

The output of the audio-to-text module 402 (i.e., text data, as a sequence of words) may feed an articulation module 404, configured to determine the articulation quality feature UQF_{A}.

This quality may be measured by comparing the output of the audio-to-text module, 402, 610 (i.e., a sequence of words) with a lexicon. This lexicon is a database where all meaningful words are stored.

If the articulation of the speaker is good enough, the likelihood is high that all converted words of the outputted sequence can be matched within the lexicon. Accordingly, the result of the matching process is representative of the articulation quality feature, UQF_{A}.

In particular, the articulation quality feature UQF_{A} can represent a matching degree, for instance as a ratio of the number of matched words on the total number of converted words.

The matching process can be implemented in various ways, including typical matching algorithms known in the art.

The grammar quality feature UQF_{G} can also be determined from the converted sequence of words to assess the grammar correctness of the language of the speaker contained in the audio stream. Then, the output of the audio-to-text module 402 may feed a grammar-checking module 405 that is configured to determine a grammar quality feature UFQ_{G}.

The grammar-checking module, aka "grammar module", 405 may be configured to produce sentences from the sequence of words outputted by the audio-to-text module, in collaboration with a language model.

Machine learning models exist in the art for sentence construction and grammar checking.

At least one machine-learning model can be applied on the produced sentences for checking their linguistic acceptability. The resulting grammar quality feature may directly represent the outcome of this checking.

For instance, Google's BERT (Bidirectional Encoder Representations from Transformers) technique can be used. Bidirectional Encoder Representations from Transformers (BERT) is a technique for NLP (Natural Language Processing) pre-training developed by Google.

BERT was created and published in 2018 by Jacob Devlin and his colleagues from Google and is described, for example, in Devlin, Jacob; Chang, Ming-Wei; Lee, Kenton; Toutanova, Kristina (11 October 2018). "BERT: Pre-training of Deep Bidirectional Transformers for Language Understanding". arXiv: 1810.04805v2

From an implementation point of view, the Hugging Face's PyTorch implementation can be used, and based on the Corpus of Linguistic Acceptability (CoLA) dataset for single sentence classification. It is a set of sentences labelled as grammatically correct or incorrect.

According to embodiments, steps of a grammar checking based on BERT implementation can comprise the following functional steps:
1 - load the dataset and parse it;
2 - Encode the sentences into BERT's understandable format;
3 - Train (fine-tuning), comprising:
   3a - Unpack sample data inputs and labels;
   3b - load data onto the GPU for acceleration;
   3c - Clear out the gradients calculated in the previous pass;
   3d - Forward pass: feed input data through the network)
   3e - Backward pass, according to backpropagation algorithm;
   3f - Update of network parameters with optimizer.step() PyTorch function;
   3g - Track variables for monitoring process
   3h - Specify BertForSequenceClassification as the final layer, as it is a classification task;
4 - Save the fine-tuned model to local disk or drive;
5 - Download the saved model and do some grammar checking in local machine.

The result of the verification of the grammar, in particular as outputted by machine learning methods performed by the grammar module 405, enables to determine an assessment of the grammar correctness of the converted sentences, and, in consequence, of the language of the audio stream. This assessment allows determining the grammar quality feature UQF_{G}.

The articulation quality feature UQF_{A} and the grammar quality feature UQF_{G} can be combined into an understandability quality feature UQF₁. This first understandability quality feature UQF₁ can also encompass other quality features related to the understandability of the speaker, from the sequence of words generated by the audio-to-text module 402.

In addition, an Information Quality Feature, IQF, may be determined by an information module 406 from the converted text data (i.e. the sequence of words outputted by the audio-to-text module 402), representative of a comparison of the semantic content of the language of the audio stream with a set of contents related to the audio stream, or, more generally, to the communication session.

In particular, as questions are known in advance, expected answers may be defined, or at least expected content (the form of the answers being candidate-dependent). These expected contents may be stored in the database DB.

According to embodiments, the expected contents may evolve over time, enriching with answers provided by previous candidates, or by previous candidates getting a high matching value at step S5.

For each question vocalized at step S1, the corresponding portion of the audiostream can be converted and analyzed to check if this extracted semantic content matches an expected content associated with the question within the database DB.

The information module 406 can retrieve one (or several) set of expected content(s). Among these expected contents, keywords can be extracted, as being representative of these expected contents. For instance, keywords can be considered as representative when they are associated with a sufficiently high occurrence frequency. Keywords can be individual words or small groups of words (e.g., 2 or 3).

Then, keywords extracted from the expected contents can be searched in the audio stream, in particular by analysing the text data outputted by the audio-to-text module 402.

By nature, it is expected that the audio stream emitted by the candidate party shall contain substantially the same keywords as expected contents. Therefore, the result of the search shall reflect the relevance of the audio stream with regard to the expected contents from a semantic point of view.

Accordingly, an information quality feature IQF can be defined as a result of the comparison, or, in other words, as an affinity factor, or correlation factor, between a list of keywords contained in the audio stream and a list of keywords extracted from the expected contents.

In particular, it can reflect a proportion of the keywords extracted from the audio source and found in the audio stream. It can also be mitigated with the occurrence of the keywords found in the expected contents, so that the weight of a common keyword is higher than a rarer one.

Different mechanisms can be implemented to determine the information quality feature IQF

According to embodiments, the search can be performed in real-time for time window of the audio stream, i.e., on the respective section of the text data. This allows capturing any potential derive for the speaker.

If the candidate gets distracted and diverges into different topics, irrelevant to the asked question, the information quality feature, IQF, will reflect this divergence for respective time windows, by showing a lower figure.

According to embodiments, the text data outputted by the audio-to-text module 402 is firstly pre-processed by the information module 406 in order to tag "void words", i.e. words conveying no or low semantic value, like delimiters and stop words.

For instance, stopwords like "is", "a", "an", "there", "are", "which", "can", "us", "in", "with", "one", "those", "after", etc. can be tagged, as well as delimiters.

An example of text data outputted by the audio-to-text module 402 may be:
"Keyword extraction is an important field of text mining. There are many techniques that can help us in keyword extraction. Rapid automatic keyword extraction is one of those".

After the pre-processing step, the data may look like:
"Keyword extraction [is an] important field [of] text mining[. There are] many techniques [which can] help [us in] keyword extraction[.] Rapid automatic extraction [is one of those].

In this above output, the signs "[]" indicates the filtered-out words, including delimiters.

Then, in a second step, text processing is performed on the content words, i.e. text data wherein stopwords and delimiters have been filtered out. However, these filtered-out words can be used while assessing if two words are successive.

This second step comprises counting the occurrences of each couple of successive words. This can be done by populating a matrix where each line and raw represents the content words, and each cell indicates the co-occurrence number of the respective words in a succession. One can further consider that a given word co-occurs with itself in a succession, so that the figures in the diagonal of the matrix represent the numbers of times the respective word appears in the full text data.

Figure 5a represents such a matrix populated based on the above-given example.

Once the matrix populated, a degree can be calculated as the sum of the co-occurrence numbers with the other content words, divided by its frequency of occurrence in the entire text data.

Figure 5b shows the results of these calculations on the example, based on Figure 5a.

Furthermore, for each co-occurrence, a new figure is calculated corresponding to a same ratio of co-occurrence numbers divided by its frequency of occurrence in the entire text data.

The figure 5c shows the result of these figures for co-occurring sequences of words.

Then, most relevant keywords (figure 5b) or sequence of keywords (figure 5c) can be determined. It can for instance be ones associated with the highest figures, or the ones with associated figures above a predetermined threshold, etc.

The next step comprises mining the expected contents to find these determined keywords (individuals and sequences).

According to embodiments, a processing has been previously performed on the audio sources, similar to the one corresponding to the previously described steps. As a result, from expected contents, a set of expected keywords (individuals and sequences) and related figures (occurrence numbers) are available.

By comparing the individual and sequence keywords of both the expected contents, and the text data, one can determine an affinity factor, or correlation factor, which is representative of an information quality feature, IQF.

It appears clearly that the information quality feature, IQF, is representative of the semantic relevance of the audio stream with regard to expected contents, which are related to a same asked question.

In particular, it measures a degree of correlation between the semantic content of the audio stream and the semantic content of the related expected contents. According to embodiments, the semantic content is captured by keywords that can be individuals (i.e. one word) or sequences (i.e. a succession of words).

In addition, according to embodiments, in a step S7, a second understandability quality feature, UQF2, can be determined by the apparatus, directly from the audio part without requiring audio-to-text conversion. In particular, the second understandability quality feature comprises a fluency quality feature, representing a fluency of the language 400 of the candidate.

According to embodiments, the fluency quality feature is determined by providing the audio stream to an audio processing module 401, for transforming it into frequency domain; and providing the resulting frequency signal into a fluency module 403 for extracting spectral features, then feeding said spectral features into a classifier, and retrieving a predicted class from the classifier.

The transformation of the audio stream into a frequency-domain signal can be done, typically, by using Fast Fourier Transform, FFT.

The frequency domain signal can be fed into a feature extractor. Several implementations are possible for extracting features from a frequency domain signal. For instance, the Librosa package is available to Python developers for providing such capabilities.

The feature vectors can then be feed to a classifier. The classifier can make use of standard machine learning approaches, including Support Vector Machines (SVM), Convolutional Neural Network (CNN), Multi-Layer Perceptron (MLP), Recurrent Neural Network (RNN), Random Forest (RF), etc. These approaches are detailed and compared, for instance, in the article, "Speaker Fluency Level Classification Using Machine Learning Techniques", by Alan Preciado-Grijalva and Ramon F. Brena, 2018, arXiv:1808.10556v1

The classifier should be trained on a relevant dataset, in order to provide accurate and meaningful predictions. For example, the Avalinguo audio set can be used. It contains audio recordings from different sources and labelled in different classes: "low", "intermediate" and "high".

In particular, the training allows defining classes for the fluency prediction (which will be reflected as Fluency Quality Feature, UFQ2). There is no single-universal definition for fluency. Each language institution may establish a fluency metric for scoring based on their internal parameters.

According to embodiments, one can take some baseline definitions for scoring speakers' fluency:
Low 0: person uses very simple expressions and talks about things in a basic way. Speaks with unnatural pauses. Needs the other person to talk slowly to understand.
Low 1: Person can understand frequently used expressions and give basic personal information. Person can talk about simple things on familiar topics but still speaks with unnatural pauses.
Intermediate 2: can deal with common situations, for example, travelling and restaurant ordering. Describes experiences and events and is capable of giving reasons, opinions or plans. Can still make some unnatural pauses.
Intermediate 3: Feels comfortable in most situations. Can interact spontaneously with native speakers but still makes prolonged pauses or incorrect use of some words. People can understand the person without putting too much effort.
High 4: Can speak without unnatural pauses (no hesitation), does not pause long to find expressions. Can use the language in a flexible way for social, academic and professional purposes.
High 5: Native-level speaker. Understands everything that reads and hears. Understand humour and subtle differences.

According to embodiments, the metrics can be only, or mainly, sound-based, with "fluent" meaning speaking without unnatural pauses. If there are hesitations (slowness or pauses) when speaking, then that affect the fluency score of the speaker.

It should be noticed that there is a distinction between fluency and proficiency. Fluency represents the capability of a speaker to feel comfortable, sound natural and manipulate all the parts of sentence at will.

These various metrics can be combined to allow assessing a matching value of the candidate with the open job position.

As explained, this assessment is at least 2-phase based:
- matching of the textual documents provided by the candidate with a job description document; and, then,
- determination of metrics assessing the quality of an automatic interview of the candidate, in terms of form (language understandability...) and content (conveyed information compared with expected content)

This matching value Q can be a single value data aggregating these various metrics, or a dashboard presenting several of these metrics and allowing a human being of the recruiting company to get a deeper understanding of the candidates.

At step S5, the apparatus can check if all candidates of the group recommended at step S0 have been considered (i.e., have been invited to an automatic interview session). If not, the workflow can loop back to step S0 for selecting a next candidate. Once all candidates have been considered, the workflow can stop.

For each candidate with a matching value Q high enough (i.e. higher to a given threshold or in the top X of the candidates ranked by matching value), a real person-to-person audio/video communication session between the candidate and a human person of the recruiting company can be triggered. This audio-video communication can be established according to standards in term of multimedia videoconference, e.g., by connecting real-time camera in candidate premises and in the recruiting company premises.

This person-to-person communication session can help finalizing the recruiting process, as there may be a need, for the recruiting company, to have a real interaction with the candidates and also to ask further questions that may not be planned in advance.

Furthermore, according to embodiments of the invention, a fraud detection module FDM is provided and configured for detecting frauds, at step S6, of said candidate party.

As the interview is undertaken in an automatic manner, it might be possible for candidate to fraud, e.g., by bringing a senior or more experience person in the communication session to get a higher matching value.

This fraud detection step S6 can be put in place during the person-to-person communication session explained earlier.

In order to avoid such fraudulent behaviour, according to embodiments, one can match the recorded audio and video with the person now in front of real time camera. Anomalies in this comparison may imply fraud and the apparatus may have means to alert the person of the recruiting company.

**In** general, detection of any fraud would disqualify the candidate. **If** there is no miss match, then the candidate can move forward and potentially gets the ticket for the face-to-face final interview.

This anomaly detection can be done through well-known face verification system and speaker verification system.

According to embodiments, the fraud detection module can verify a face associated to said candidate party from a video stream associated with said communication session.

According to embodiments, a first step consists in detecting and locating candidate's face from the video, which is captured during interview sessions by using any well-known image segmentation algorithm.

Next, facial features need to be extracted with the use of machine learning or deep learning techniques.

Several techniques are available in the art concerning face recognition. A paper like Wang, Mei and Weihong Deng. "Deep Face Recognition: A Survey." Neurocomputing 429 (2021): 215-244 can be an entry point for such techniques. Further, some industrial products are also available, like listed for instance in :
https://www.thalesgroup.com/en/markets/digital-identity-and-security/government/biometrics/facial-recognition

These steps can be performed for both the stored videos (i.e. captured during communication sessions at steps S1/S2) real-time video stream captured during the person-to-person interview.

Lastly, the similarity check or face match process verifies if the two faces, which are captured in real-time and during interview, belong to the same person.

Also, according to embodiments, the fraud detection module can verify a voice associated to said candidate party from said audio stream.

According to embodiments, speech recognition can be based on the conversion of sound waves to individual letters and ultimately sentences using Fast-Fourier transform and ML learning techniques. Deep learning can also be a good candidate to address this speech recognition problem as per the literature.

Out of the available literature, one can point out:
- Sadaoki Furui, in Human-Centric Interfaces for Ambient Intelligence, 2010
- Bai, Zhongxin and Xiao-Lei Zhang. "Speaker recognition based on deep learning: An overview." Neural networks : the official journal of the International Neural Network Society 140 (2021): 65-99 .

Albeit in speaker verification or authentication, an identity is claimed by the speaker (candidate interviewee), whose utterance is compared with a model for the registered speaker (that is captured during the automatic interview session in step S2) whose identity is being claimed.

It is well-defined in the literature that Gaussian Mixer Model (GMM) is one of the most popular machine learning models used for extracting the features and training while dealing with audio data. Transfer learning is one of the deep learning techniques, which can also be used in this system to extract the features from interviewee's audio data. GMM model or Transfer learning model will be used to calculate the scores of the features for the audio samples. If the score match is good enough -that is, above a threshold- the claim is accepted, i.e., the candidate who joined the automatic interview sessions can be then considered the same as the one joining the person-to-person interview session. The outcome of the automatic interview session (e.g., the matching value Q) can then be considered as valid.

The description and drawings merely illustrate the principles of the invention. It will thus be appreciated that those skilled in the art will be able to devise various arrangements that, although not explicitly described or shown herein, embody the principles of the invention and are included within its scope as defined by the appended claims. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. Apparatus (1) for automatically conducting an interview over a telecommunication network (4), with at least one candidate party (2a, 2b, ... 2N) to an open job position; comprising means for:
- preselecting (S0) a candidate party among said at least one candidate party by matching respective textual documents associated with said at least one candidate party with a job description document associated with said open job position, and said textual documents comprise one or more among a resume describing the educational and professional careers of the candidate and a letter explaining why the candidate considers themselves matching the job description, using a recommender system; implementing a content-based filtering approach,
- initiating (S1) a communication session between said candidate party and an automated interviewing party;
- monitoring (S2) said communication session by continuously receiving an audio stream associated with said communication sessions;
- converting (S3) language of said audio stream into text data
- determining (S4), from said text data, at least first understandability quality features (UQF_{A}, UQF_{G}) and an information quality feature (IQF), said first understandability quality feature being representative of at least word articulation and grammar correctness within said language, and said information quality feature being representative of a comparison of the semantic content of said audio stream with an expected content;
- assessing (S5) a matching value of said candidate party for said open job position.
- wherein said means are further configured to determine an articulation quality feature (UQF_{A}) by comparing said text data with a lexicon, to determine a grammar quality feature (UQF_{G}) by producing sentences from said text data and applying at least one machine-learning model for checking linguistic acceptability of said sentences and to determine said information quality feature (IQF) by determining keywords from said text data, and comparing the occurrences of said keywords with occurrences of same keywords within said expected content.

2. The apparatus according to any of the previous claim, wherein said means are configured for initiating said communication session by sequencing a succession of questions; and vocalizing said questions for transmission over said communication session.

3. The apparatus according to the previous claim, wherein said means are configured for initiating said communication session by providing a virtual avatar and transmitting a video stream of said virtual avatar to said candidate party; and synchronizing at least one graphical feature of said virtual avatar with said questions.

4. The apparatus according to any of the previous claims, wherein the means are further configured for determining (S7) at least a second understandability quality feature (UQF2) from said audio stream representative of a fluency of said language.

5. The apparatus according to the previous claim, wherein said means are configured to determine said second understandability quality feature by
- providing said audio stream to an audio processing module (401), for transforming it into a frequency domain signal;
- extracting spectral features from said frequency domain signal, and
- using a classifier to provide a predicted class from said spectral features, said predicted class being representative of said second understandability quality feature.

6. The apparatus according to any of the previous claims, wherein said means are configured for detecting (S6) frauds of said candidate party.

7. The apparatus according to the previous claim, wherein said means are configured for detecting frauds by verifying a face associated to said candidate party from a video stream associated with said communication session.

8. The apparatus according to claim 7 or 8, wherein said means are configured for detecting frauds by verifying a voice associated to said candidate party from said audio stream.

9. The apparatus of any preceding claim wherein the means comprises
- at least one processor; and
- at least one memory including computer program code, the at least one memory and computer program code configured to, with the at least one processor, cause the performance of the apparatus.

10. Method for automatically conducting an interview over a telecommunication network (4), with at least one candidate party (2a, 2b, ... 2N) to an open job position; comprising steps for:
- preselecting (S0) a candidate party among said at least one candidate party by matching respective textual documents associated with said at least one candidate party with a job description document associated with said open job position, and said textual documents comprise one or more among a resume describing the educational and professional careers of the candidate and a letter explaining why the candidate considers themselves matching the job description, using a recommender system implementing a content-based filtering approach;
- initiating (S1) a communication session between said candidate party and an automated interviewing party (1)
- monitoring (S2) said communication session by continuously receiving an audio stream associated with said communication sessions;
- Converting (S3) language of said audio stream into text data
- determining (S4), from said text data, at least first understandability quality features (UQF_{A}, UQF_{G}) and an information quality feature (IQF), said first understandability quality feature being representative of at least word articulation and grammar correctness within said language, and said information quality feature being representative of a comparison of the semantic content of said audio stream with an expected content;
- assessing (S5) a matching value of said candidate party for said open job position.
- further comprising determining an articulation quality feature (UQF_{A}) by comparing said text data with a lexicon, determining a grammar quality feature (UQF_{G}) by producing sentences from said text data and applying at least one machine-learning model for checking linguistic acceptability of said sentences and determining said information quality feature (IQF) by determining keywords from said text data, and comparing the occurrences of said keywords with occurrences of same keywords within said expected content.

11. A computer readable medium encoding a machine-executable program of instructions to perform a method according to the previous claim.

## Patentansprüche

1. Einrichtung (1) zum automatischen Durchführen eines Gesprächs über ein Telekommunikationsnetz (4) mit mindestens einer Kandidatenpartei (2a, 2b, ...2N) zu einer offenen Stelle; umfassend Mittel zum:
- Vorauswählen (S0) einer Kandidatenpartei aus der mindestens einen Kandidatenpartei durch Abgleichen jeweiliger Textdokumente, die der mindestens einen Kandidatenpartei zugeordnet sind, mit einem Stellenbeschreibungsdokument, das der offenen Stelle zugeordnet ist, und wobei die Textdokumente einen oder mehrere von einem Lebenslauf, der den Bildungs- und Berufsweg des Kandidaten beschreibt, und einem Schreiben, in dem erläutert wird, warum der Kandidat glaubt, der Stellenbeschreibung zu entsprechen, umfassen, unter Verwendung eines Empfehlungssystems, das einen inhaltsbasierten Filteransatz implementiert,
- Initiieren (S1) einer Kommunikationssitzung zwischen der Kandidatenpartei und einer automatisierten Gesprächsführerpartei;
- Überwachen (S2) der Kommunikationssitzung durch kontinuierliches Empfangen eines Audiostroms, der den Kommunikationssitzungen zugeordnet ist;
- Konvertieren (S3) von Sprache des Audiostroms in Textdaten
- Bestimmen (S4), aus den Textdaten, mindestens erster Verständlichkeitsqualitätsmerkmale (UQF_{A}, UQF_{G}) und eines Informationsqualitätsmerkmals (IQF), wobei das erste Verständlichkeitsqualitätsmerkmal mindestens Wortartikulation und grammatikalische Richtigkeit innerhalb der Sprache darstellt und das Informationsqualitätsmerkmal einen Vergleich des semantischen Inhalts des Audiostroms mit einem erwarteten Inhalt darstellt;
- Bewerten (S5) eines Übereinstimmungswerts der Kandidatenpartei für die offene Stelle.
- wobei die Mittel ferner konfiguriert sind, um ein Artikulationsqualitätsmerkmal (UQF_{A}) durch Vergleichen der Textdaten mit einem Lexikon zu bestimmen, um ein grammatisches Qualitätsmerkmal (UQF_{G}) durch Erzeugen von Sätzen aus den Textdaten und Anwenden mindestens eines Maschinenlernmodells zum Überprüfen der sprachlichen Akzeptanz der Sätze zu bestimmen und um das Informationsqualitätsmerkmal (IQF) durch Bestimmen von Schlüsselwörtern aus den Textdaten und Vergleichen der Vorkommen der Schlüsselwörter mit Vorkommen derselben Schlüsselwörter innerhalb des erwarteten Inhalts zu bestimmen.

2. Einrichtung nach einem der vorhergehenden Ansprüche, wobei die Mittel zum Initiieren der Kommunikationssitzung durch Sequenzieren einer Abfolge von Fragen konfiguriert sind; und Aussprechen der Fragen für Übertragung über die Kommunikationssitzung.

3. Einrichtung nach dem vorhergehenden Anspruch, wobei die Mittel zum Initiieren der Kommunikationssitzung durch Bereitstellen eines virtuellen Avatars und Übertragen eines Videostroms des virtuellen Avatars an die Kandidatenpartei konfiguriert sind; und Synchronisieren mindestens eines grafischen Merkmals des virtuellen Avatars mit den Fragen.

4. Einrichtung nach einem der vorhergehenden Ansprüche, wobei die Mittel ferner zum Bestimmen (S7) mindestens eines zweiten Verständlichkeitsqualitätsmerkmals (UQF2) aus dem Audiostrom, das eine Sprachgewandtheit der Sprache darstellt, konfiguriert sind.

5. Einrichtung nach dem vorhergehenden Anspruch, wobei die Mittel konfiguriert sind, um das zweite Verständlichkeitsqualitätsmerkmal zu bestimmen durch
- Bereitstellen des Audiostroms an ein Audioverarbeitungsmodul (401), zum Transformieren dessen in ein Frequenzbereichssignal;
- Extrahieren spektraler Merkmale aus dem Frequenzbereichssignal und
- Verwenden eines Klassifikators, um aus den spektralen Merkmalen eine vorhergesagte Klasse bereitzustellen, wobei die vorhergesagte Klasse das zweite Verständlichkeitsqualitätsmerkmal darstellt.

6. Einrichtung nach einem der vorhergehenden Ansprüche, wobei die Mittel zum Erkennen (S6) von Betrügen der Kandidatenpartei konfiguriert sind.

7. Einrichtung nach dem vorhergehenden Anspruch, wobei die Mittel zum Erkennen von Betrügen durch Verifizieren eines Gesichts, das der Kandidatenpartei zugeordnet ist, aus einem Videostrom, der der Kommunikationssitzung zugeordnet ist, konfiguriert sind.

8. Einrichtung nach einem der Ansprüche 7 oder 8, wobei die Mittel zum Erkennen von Betrügen durch Verifizieren einer Stimme, die der Kandidatenpartei zugeordnet ist, aus dem Audiostrom, konfiguriert sind.

9. Einrichtung nach einem der vorhergehenden Ansprüche, wobei die Mittel umfassen
- mindestens einen Prozessor; und
- mindestens ein Speicher, der Computerprogrammcode einschließt, wobei der mindestens eine Speicher und der Computerprogrammcode konfiguriert sind, um zusammen mit dem mindestens einen Prozessor, die Leistung der Einrichtung zu bewirken.

10. Verfahren zum automatischen Durchführen eines Gesprächs über ein Telekommunikationsnetz (4) mit mindestens einer Kandidatenpartei (2a, 2b, ...2N) zu einer offenen Stelle; umfassend Schritte zum:
- Vorauswählen (S0) einer Kandidatenpartei aus der mindestens einen Kandidatenpartei durch Abgleichen jeweiliger Textdokumente, die der mindestens einen Kandidatenpartei zugeordnet sind, mit einem Stellenbeschreibungsdokument, das der offenen Stelle zugeordnet ist, und wobei die Textdokumente einen oder mehrere von einem Lebenslauf, der den Bildungs- und Berufsweg des Kandidaten beschreibt, und einem Schreiben, in dem erläutert wird, warum der Kandidat glaubt, der Stellenbeschreibung zu entsprechen, umfassen, unter Verwendung eines Empfehlungssystems, das einen inhaltsbasierten Filteransatz implementiert;
- Initiieren (S1) einer Kommunikationssitzung zwischen der Kandidatenpartei und einer automatisierten Gesprächsführerpartei (1)
- Überwachen (S2) der Kommunikationssitzung durch kontinuierliches Empfangen eines Audiostroms, der den Kommunikationssitzungen zugeordnet ist;
- Konvertieren (S3) von Sprache des Audiostroms in Textdaten
- Bestimmen (S4), aus den Textdaten, mindestens erster Verständlichkeitsqualitätsmerkmale (UQF_{A}, UQF_{G}) und eines Informationsqualitätsmerkmals (IQF), wobei das erste Verständlichkeitsqualitätsmerkmal mindestens Wortartikulation und grammatikalische Richtigkeit innerhalb der Sprache darstellt und das Informationsqualitätsmerkmal einen Vergleich des semantischen Inhalts des Audiostroms mit einem erwarteten Inhalt darstellt;
- Bewerten (S5) eines Übereinstimmungswerts der Kandidatenpartei für die offene Stelle,
- ferner umfassend Bestimmen eines Artikulationsqualitätsmerkmals (UQF_{A}) durch Vergleichen der Textdaten mit einem Lexikon, Bestimmen eines grammatischen Qualitätsmerkmals (UQF_{G}) durch Erzeugen von Sätzen aus den Textdaten und Anwenden mindestens eines Maschinenlernmodells zum Überprüfen der sprachlichen Akzeptanz der Sätze und Bestimmen des Informationsqualitätsmerkmals (IQF) durch Bestimmen von Schlüsselwörtern aus den Textdaten und Vergleichen der Vorkommen der Schlüsselwörter mit Vorkommen derselben Schlüsselwörter innerhalb des erwarteten Inhalts.

11. Computerlesbares Medium, das ein maschinenausführbares Programm mit Anweisungen, ein Verfahren nach dem vorhergehenden Anspruch umzusetzen, codiert.

## Revendications

1. Appareil (1) destiné à mener automatiquement un entretien sur un réseau de télécommunication (4), avec au moins une partie candidat (2a, 2b, ... 2N) à un poste à pourvoir ; comprenant des moyens pour :
- présélectionner (S0) une partie candidat parmi ladite au moins une partie candidat en faisant correspondre des documents textuels respectifs associés à ladite au moins une partie candidat avec un descriptif de poste associé audit poste à pourvoir, et lesdits documents textuels comprennent un ou plusieurs parmi un curriculum vitæ décrivant les études et la carrière professionnelle du candidat et une lettre expliquant pourquoi le candidat considère qu'il correspond au descriptif de poste, à l'aide d'un système de recommandation mettant en œuvre une approche de filtrage basée sur le contenu,
- initier (S1) une session de communication entre ladite partie candidat et une partie chargée de l'entretien automatisée ;
- surveiller (S2) ladite session de communication en recevant en continu un flux audio associé auxdites sessions de communication ;
- convertir (S3) une langue dudit flux audio en données textuelles
- déterminer (S4), à partir desdites données textuelles, au moins des premières caractéristiques de qualité d'intelligibilité (UQF_{A}, UQF_{G}) et une caractéristique de qualité de l'information (IQF), ladite première caractéristique de qualité d'intelligibilité étant représentative d'au moins une articulation des mots et une exactitude de la grammaire dans ladite langue, et ladite caractéristique de qualité de l'information étant représentative d'une comparaison du contenu sémantique dudit flux audio avec un contenu attendu ;
- évaluer (S5) une valeur de correspondance de ladite partie candidat pour ledit poste à pourvoir.
- dans lequel lesdits moyens sont en outre configurés pour déterminer une caractéristique de qualité d'articulation (UQF_{A}) en comparant lesdites données textuelles à un lexique, pour déterminer une caractéristique de qualité de grammaire (UQF_{G}) en produisant des phrases à partir desdites données textuelles et en appliquant au moins un modèle d'apprentissage automatique pour vérifier l'acceptabilité linguistique desdites phrases et pour déterminer ladite caractéristique de qualité d'information (IQF) en déterminant des mots-clés à partir desdites données textuelles et en comparant les occurrences desdits mots-clés avec des occurrences des mêmes mots-clés dans ledit contenu attendu.

2. Appareil selon l'une quelconque des revendications précédentes, dans lequel lesdits moyens sont configurés pour initier ladite session de communication en séquençant une succession de questions ; et vocaliser lesdites questions pour les transmettre au cours de ladite session de communication.

3. Appareil selon la revendication précédente, dans lequel lesdits moyens sont configurés pour initier ladite session de communication en fournissant un avatar virtuel et en transmettant un flux vidéo dudit avatar virtuel à ladite partie candidat ; et synchroniser au moins une caractéristique graphique dudit avatar virtuel avec lesdites questions.

4. Appareil selon l'une quelconque des revendications précédentes, dans lequel les moyens sont en outre configurés pour déterminer (S7) au moins une seconde caractéristique de qualité d'intelligibilité (UQF2) à partir dudit flux audio, représentative de la fluidité de ladite langue.

5. Appareil selon la revendication précédente, dans lequel lesdits moyens sont configurés pour déterminer ladite seconde caractéristique de qualité d'intelligibilité par
- la fourniture dudit flux audio à un module de traitement audio (401) pour le transformer en un signal de domaine de fréquence ;
- l'extraction de caractéristiques spectrales dudit signal de domaine de fréquence, et
- l'utilisation d'un classificateur pour fournir une classe prédite à partir desdites caractéristiques spectrales, ladite classe prédite étant représentative de ladite seconde caractéristique de qualité d'intelligibilité.

6. Appareil selon l'une quelconque des revendications précédentes, dans lequel lesdits moyens sont configurés pour détecter (S6) des fraudes de ladite partie candidat.

7. Appareil selon la revendication précédente, dans lequel lesdits moyens sont configurés pour détecter des fraudes en vérifiant un visage associé à ladite partie candidat à partir d'un flux vidéo associé à ladite session de communication.

8. Appareil selon la revendication 7 ou 8, dans lequel lesdits moyens sont configurés pour détecter des fraudes en vérifiant une voix associée à ladite partie candidat à partir dudit flux audio.

9. Appareil selon l'une quelconque revendication précédente, dans lequel les moyens comprennent
- au moins un processeur ; et
- au moins une mémoire comportant un code de programme informatique, l'au moins une mémoire et le code de programme informatique étant configurés, avec l'au moins un processeur, pour amener la mise en œuvre de l'appareil.

10. Procédé destiné à mener automatiquement un entretien sur un réseau de télécommunication (4), avec au moins une partie candidat (2a, 2b, ... 2N) à un poste à pourvoir ; comprenant des étapes pour :
- présélectionner (S0) une partie candidat parmi ladite au moins une partie candidat en faisant correspondre les documents textuels respectifs associés à ladite au moins une partie candidat avec un descriptif de poste associé audit poste à pourvoir, et lesdits documents textuels comprennent un ou plusieurs parmi un curriculum vitæ décrivant les études et la carrière professionnelle du candidat et une lettre expliquant pourquoi le candidat considère qu'il correspond au descriptif de poste, à l'aide d'un système de recommandation mettant en œuvre une approche de filtrage basée sur le contenu ;
- initier (S1) une session de communication entre ladite partie candidat et une partie chargée de l'entretien automatisée (1)
- surveiller (S2) ladite session de communication en recevant en continu un flux audio associé auxdites sessions de communication ;
- convertir (S3) une langue dudit flux audio en données textuelles
- déterminer (S4), à partir desdites données textuelles, au moins des premières caractéristiques de qualité d'intelligibilité (UQF_{A}, UQF_{G}) et une caractéristique de qualité de l'information (IQF), ladite première caractéristique de qualité d'intelligibilité étant représentative au moins d'une articulation des mots et d'une exactitude de la grammaire dans ladite langue, et ladite caractéristique de qualité de l'information étant représentative d'une comparaison du contenu sémantique dudit flux audio avec un contenu attendu ;
- évaluer (S5) une valeur de correspondance de ladite partie candidat pour ledit poste à pourvoir,
- déterminer, en outre, une caractéristique de qualité d'articulation (UQF_{A}) en comparant lesdites données textuelles à un lexique, déterminer une caractéristique de qualité de grammaire (UQF_{G}) en produisant des phrases à partir desdites données textuelles et en appliquant au moins un modèle d'apprentissage automatique pour vérifier l'acceptabilité linguistique desdites phrases, et déterminer ladite caractéristique de qualité d'information (IQF) en déterminant des mots-clés à partir desdites données textuelles et en comparant les occurrences desdits mots-clés à des occurrences des mêmes mots-clés dans ledit contenu attendu.

11. Support lisible par ordinateur codant un programme exécutable par machine d'instructions pour mettre en œuvre un procédé selon la revendication précédente.
